# EUROPEAN PATENT SPECIFICATION

(11) **EP 3 525 442 B1**
(45) Date of publication and mention of the grant of the patent: **01.12.2021**
(21) Application number: 19156990.4
(22) Date of filing: 13.02.2019
(51) Int. Cl.: H04N 1/52, H04N 1/58

(54) **IMAGE DATA PROCESSING METHOD, IMAGE DATA PROCESSING APPARATUS AND INKJET RECORDING APPARATUS**
BILDDATENVERARBEITUNGSVERFAHREN, BILDDATENVERARBEITUNGSVORRICHTUNG UND TINTENSTRAHLAUFZEICHNUNGSVORRICHTUNG
PROCÉDÉ DE TRAITEMENT DE DONNÉES D'IMAGE, APPAREIL DE TRAITEMENT DE DONNÉES ET APPAREIL D'ENREGISTREMENT À JET D'ENCRE

(30) Priority: 13.02.2018 JP 2018022703
(43) Date of publication of application: 14.08.2019
(73) Proprietor: Konica Minolta, Inc., Tokyo 100-7015 (JP)
(72) Inventor: HANASHIMA, Yusuke, Tokyo, 100-7015 (JP)
(74) Representative: Henkel & Partner mbB

(56) References cited:
- WO-A1-02/02331
- US-A1- 2009 027 731
- US-A1- 2015 286 905
- US-A1- 2016 057 312

## Description

### Background

### 1. Technological Field

The present invention relates to an image data processing method, an image data processing apparatus and an inkjet recording apparatus.

### 2. Description of the Related Art

There is an inkjet recording apparatus which discharges ink onto a medium from a nozzle and which records a two-dimensional image or structure on the medium. The image data as the target of recording using the inkjet recording apparatus is converted to driving data defining whether the ink is discharged from the nozzle and the discharged amount, and the driving data is supplied to the driver of each nozzle.

In the driving data, the image is defined in the unit of dots, and there is a problem that the outline of the image may be unclear according to the image density/tone characteristics, image data conversion characteristics, resolution and accuracy of nozzle alignment, and the like. Japanese Patent Application Laid-Open Publication No. 2015-198283 describes a technique which suppresses reduction of the image quality when an image is recorded. When converting to dot image data with a plurality of tones, the setting of the ink discharge amount is switched to a suitable amount according to the characteristics in the image, that is, the thin line portion, edge portion of characters and density/tone.

However, the boundary may be uneven due to shift in the positions among the nozzles which discharge different ink when the image is recorded using a plurality of types of ink with different colors. Such unevenness in boundaries can be easily found by sight, and this leads to decrease in the image quality. Enhancing the accuracy of positioning the nozzle leads to increase in the burden and costs.

US 2016/0057312 A1 discloses to reduce jaggies in an edge portion while suppressing deterioration of an image to a minimum. This involves edge detection and results in generating an output image in which a screen dot existing in the edge in the screen data is shifted into the inside of the object.

US 2009/0027731 A1 and WO 02/02331 A1 disclose further techniques of shifting dots in order to improve image quality.

### Summary

The object of the present invention is to provide an image data processing method, an image data processing apparatus and an inkjet recording apparatus to easily obtain image data in which decrease of image quality of a recorded image can be easily suppressed.

This object is achieved with the present invention as defined in the appended claims. According to an aspect of the present invention, an image data processing method is described, the image data processing method performed on original image data as a target to be recorded by a plurality of recording operating units (20) which discharge ink in different colors, the method including: a first processing step which performs a half tone process on the original image data for each component in a different color and which generates halftone image data in which whether there is an ink discharge setting is defined in each dot position; and a second processing step which generates ink discharge setting data in which a movement process is performed on the halftone image data generated for each color component, the movement process being a process in which the ink discharge setting in at least some of an ink discharge setting position is dispersed and moved to a surrounding dot position.

According to another aspect of the present invention, an image data processing apparatus includes: a controller (40) which performs a data process for original image data as a target to be recorded by a plurality of recording operating units (20) which discharge ink in different colors, wherein, the controller performs a half tone process on the original image data for each component in a different color to generate halftone image data for each color, the halftone image data defining whether there is an ink discharge setting for each dot position, and the controller generates ink discharge setting data by performing a movement process on the halftone image data generated for each color, the movement process being a process in which the ink discharge setting in at least some of an ink discharge setting position is dispersed and moved.

According to another aspect of the present invention, an inkjet recording apparatus (100) includes: the above-described image data processing apparatus; and a plurality of recording operating units which discharge a plurality of different colors of ink.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention.
FIG. 1 is an entire perspective view of an inkjet recording apparatus.
FIG. 2A is a bottom view showing a surface facing a conveying surface of a head unit in the inkjet recording apparatus.
FIG. 2B is an enlarged view of a bottom surface of the head unit.
FIG. 3 is a block diagram showing a functional configuration of the inkjet recording apparatus.
FIG. 4 is a diagram showing a change in discharged dot percentage with relation to tone shown in tone dot corresponding information.
FIG. 5A is a diagram showing an example of an ink discharge position when a thin line is recorded overlapping two colors of ink.
FIG. 5B is a diagram showing an example of an ink discharge position when a thin line is recorded overlapping two colors of ink.
FIG. 5C is a diagram showing an example of an ink discharge position when a thin line is recorded overlapping two colors of ink.
FIG. 5D is a diagram showing an example of an ink discharge position when a thin line is recorded overlapping two colors of ink.
FIG. 6A is a diagram describing a characteristic of a dither matrix.
FIG. 6B is a diagram describing a characteristic of a dispersion arrangement matrix.
FIG. 7A is a diagram describing a dispersion arrangement of an ink discharge setting position.
FIG. 7B is a diagram describing a dispersion arrangement of an ink discharge setting position.
FIG. 7C is a diagram describing a dispersion arrangement of an ink discharge setting position.
FIG. 8 is a flowchart showing a control process in a driving image generating process.
FIG. 9 is a flowchart showing a control process in an ink discharge setting movement process.
FIG. 10A is a diagram showing a modification of a range setting table.
FIG. 10B is a diagram showing a modification of a range setting table.
FIG. 10C is a diagram showing a modification of a range setting table.

### Detailed Description of Embodiments

Embodiments of the present invention are described in detail with reference to the drawings. However, the scope of the invention is not limited to the disclosed embodiments.

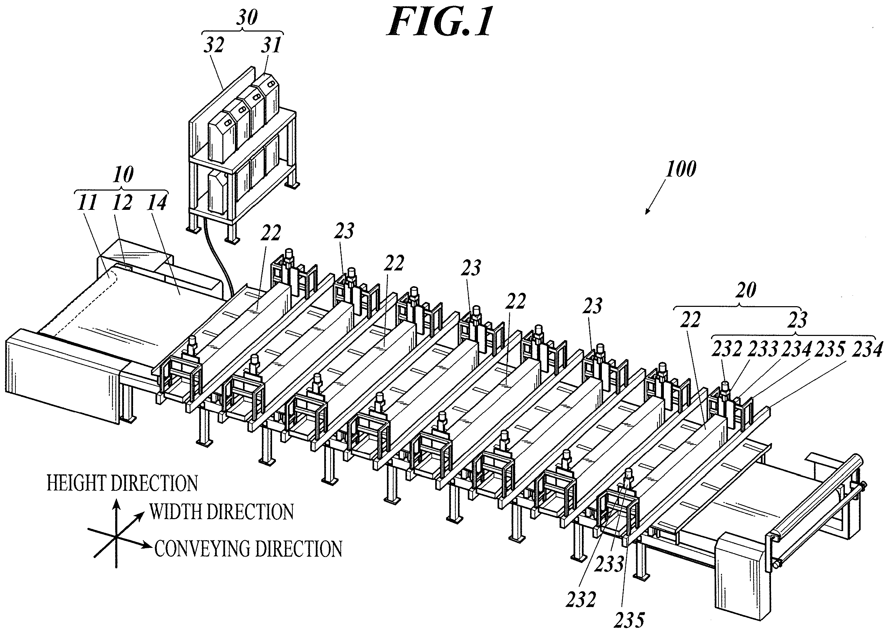

FIG. 1 is an entire perspective view of an inkjet recording apparatus 100 according to the present embodiment.

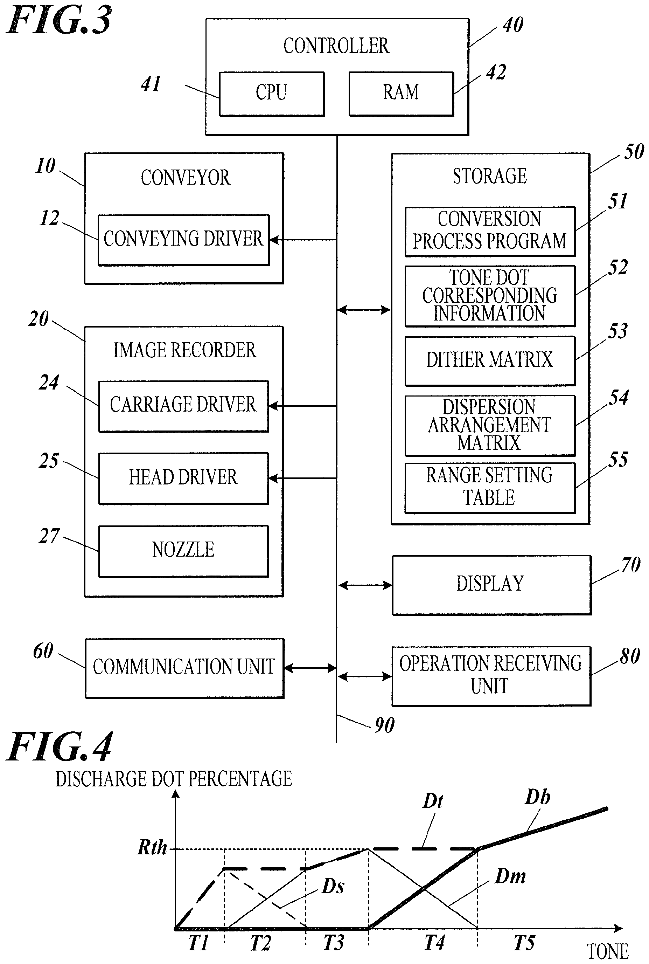

The inkjet recording apparatus 100 includes a plurality of line heads and is able to record a color image according to a single pass method by discharging ink in a plurality of colors. The inkjet recording apparatus 100 includes a conveyor 10, an image recorder 20, an ink storage 30, and a controller 40 (see FIG. 3).

The conveyor 10 includes a driving roller 11, a conveying driver 12, and a conveying belt 14. The conveying driver 12 includes a rotating motor which rotates the driving roller 11 at a predetermined speed. The endless conveying belt 14 is rolled with a following roller (not shown) around the driving roller 11 and the conveying belt 14 moves in a circle with the rotation of the driving roller 11. The conveying belt 14 includes an outer side surface as a conveying surface and a recording medium is placed on the conveyor surface. The recording medium is conveyed in the conveying direction with the circling movement of the conveying belt 14. The recording medium is not limited but here, a long rolled fabric is sent and conveyed continuously. The type of fabric is not limited but may include cotton, wool, polyester and the like. Various types of fabric can be used.

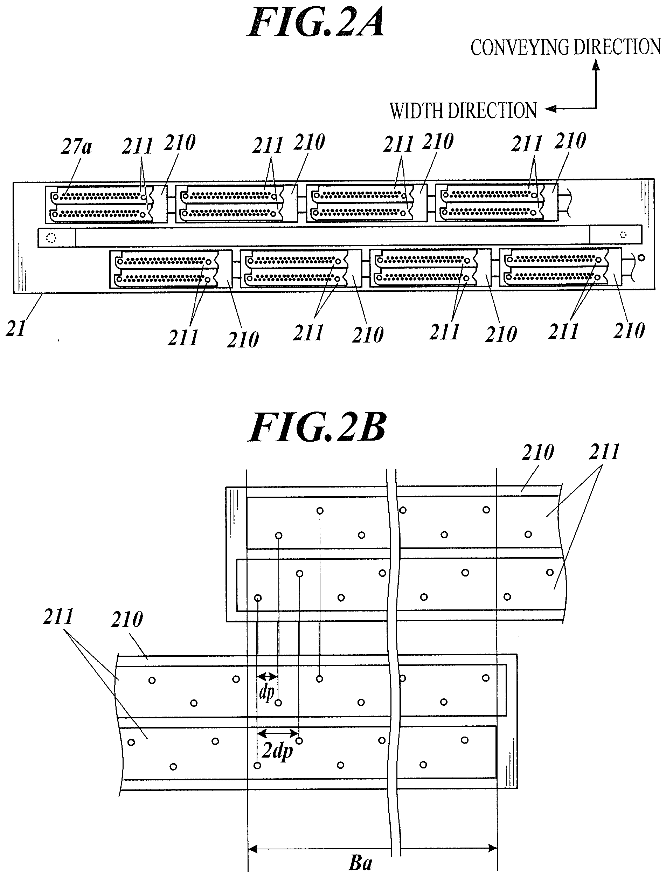

The length of the conveying belt 14 is determined according to a length of the image recorder 20 in the conveying direction, and for example, may be a length of a few meters or longer. While such conveying belt 14 circles, a vibration in a width direction, a very slight eccentricity of the driving roller 11 or a very slight unevenness in the tension of the conveying belt 14 may occur. As a result, a change in the position of the conveying belt 14 (that is, the place recording medium) may occur in a degree of about a few micrometers to a few tens of micrometers in the width direction with respect to the position of a nozzle opening 27a (see FIG. 2A).

The image recorder 20 includes a carriage 22 and a carriage raising/lowering unit 23. A combination of the carriage 22 and the carriage raising/lowering unit 23 is provided in a number (here, 8 pairs) according to the number of colors of ink (plurality of colors). The carriage 22 is positioned on an extension in a direction intersecting with the conveying direction of the recording medium conveyed by the conveyor 10, here orthogonal to the width direction. The carriage 22 is positioned above (height direction) the conveying surface of the recording medium conveyed by the conveyor 10. The carriage 22 includes a line-head structure in which a head unit 21 (see FIG. 2A) is fixed, and each head unit 2 lis able to discharge droplets of ink with colors different from each other from the nozzle opening 27a (see FIG. 2) which is provided throughout the entire width of the conveyed recording medium. The number of nozzles included in each head unit 21 is suitably determined according to the recording resolution. The plurality of carriages 22 are provided in the conveying direction in positions different from each other. The carriage 22 is provided so as to be able to change the distance from above (farther direction, that is, height direction) the conveying surface by the carriage raising/lowering unit 23, and the distance from the conveying surface of the head unit 21 is also changed with the movement of the carriage 22.

The carriage raising/lowering unit 23 changes the distance from the conveying surface of the carriage 22. The carriage raising/lowering unit 23 includes a raising/lowering motor 232, an electromagnetic brake 233, a beam material 234, and a supporting unit 235.

Two beam materials 234 are provided substantially parallel in a direction (here, orthogonal direction, that is, width direction) intersecting with the conveying direction of the upper portion of the conveying belt 14 (conveying surface side of the recording medium). The supporting units 235 are fixed to both ends of the beam materials 234. The raising/lowering motor 232, the electromagnetic brake 233, and the carriage 22 are attached to the supporting unit 235.

The position of the carriage 22 is determined by being raised and lowered according to the operation by the raising/lowering motor 232 and electromagnetic brake 233, both of which are driven based on the control signal from the controller 40 (see FIG. 3).

The raising/lowering motor 232 moves the carriage 22 at a predetermined raising/lowering speed. As the raising/lowering motor 232, for example, a servomotor or a stepping motor is used.

The electromagnetic brake 233 maintains a fixed state of the carriage 22. When the fixed state is released according to the driving signal, the raising/lowering motor 232 is able to move the carriage 22 temporarily. That is, in a normal state including when the supply of power is cut, the electromagnetic brake 233 fixes the carriage 22. As the electromagnetic brake 233, for example, a disk brake is used.

The ink storage 30 stores ink in each color used in recording the image and supplies the ink to the recording head 211. The ink storage 30 includes an ink tank 31 and a dedicated rack 32. The ink tank 31 is connected to the image recorder 20 through a tube, etc. Although not limited to the following example, the ink storage 30 includes ink tanks 31 in which various colors of ink for a plurality of colors (here, 8 colors) including C (cyan), M (magenta), Y (yellow), and K (black) are stored, and the ink is supplied to recording heads 211 attached to separate carriages 22. The color and type of ink connected and supplied to the recording head 211 can be exchanged.

FIG. 2A is a bottom view showing a surface facing the conveying surface of the head unit 21 in the inkjet recording apparatus 100 according to the present embodiment. The structures of the plurality of head units 21 (eight recording operating units) which discharge ink in various colors (eight colors) are the same, and here, one head unit 21 is described.

Eight head modules 210 are arrayed in a zig-zag arrangement on the bottom surface side of the head unit 21 fixed to the carriage 22. Each head module 210 includes two recording heads 211. On the bottom surface of each recording head 211, the nozzle openings 27a (nozzle) are arrayed in a zig-zag arrangement in different positions in the width direction so that the interval in the width direction is twice the size of a predetermined nozzle interval dp. The two recording heads 211 in each head module 210 is positioned shifted from each other in the amount of the nozzle interval dp in the width direction. The plurality of nozzle openings 27a (nozzle) are positioned in different positions so that there is a nozzle interval dp in the width direction in the entire head module 210.

FIG. 2B shows an enlarged diagram of an array of the nozzle openings 27a on the bottom surface. In a nozzle positioning range which is the range in which the nozzle openings 27a are arrayed in each head module 21, there is an overlapping portion Ba in the width direction between head modules 210 adjacent in the width direction. That is, in such overlapping portion Ba, in the same position in the width direction (dot position, actually may include a slight shift in relative position), ink can be discharged from one nozzle opening 27a each belonging to either of two head modules 210. In the overlapping portions Ba, in each position in the width direction, allocation is performed to be able to discharge ink from either one of the nozzle openings 27a.

Next, the functional configuration of the inkjet recording apparatus 100 according to the present embodiment is described.

FIG. 3 is a block diagram showing a functional configuration of the inkjet recording apparatus 100.

The inkjet recording apparatus 100 includes, in addition to the above-described conveying driver 12 and the image recorder 20, a controller 40, a storage 50, a communication unit 60, a display 70, an operation receiving unit 80, and a bus 90.

The image recorder 20 includes a plurality of nozzles 27, a head driver 25 which discharges ink from the plurality of nozzles 27, and the carriage driver 24.

The carriage driver 24 outputs a driving signal to the electromagnetic brake 233 and the raising/lowering motor 232 according to the control signal from the controller 40. The carriage driver 24 moves the carriage to the predetermined position by releasing the electromagnetic brake 233 and operating the raising/lowering motor 232 or fixes the carriage using the electromagnetic brake 233 while stopping the raising/lowering motor 232.

The head driver 25 operates the mechanism which receives the supply of ink from the ink tank 31 and applies pressure to the ink in the ink flow path which passes the ink communicated with each nozzle 27. For example, the head driver 25 generates and outputs a driving voltage signal to a piezoelectric element which deforms a wall of a pressure chamber provided in the ink flow path. The head driver 25 selects a voltage waveform pattern stored in advance based on the control signal from the controller 40 and generates the driving voltage signal with the power amplified. The head driver 25 switches whether to output the driving voltage signal to the piezoelectric element according to image data (driving image data) input from the storage 50. Due to the deforming of the piezoelectric element, the pressure chamber deforms, and a change in pressure is applied to the ink in the predetermined pattern. According to the above, ink droplets in a desired amount are discharged in a desired speed from the nozzle opening 27a. Here, a plurality of voltage waveform patterns and amplitude settings of the driving voltage are stored in the storage 50 so that the amount of discharged ink droplets can be changed in a plurality of levels, for example three levels.

The controller 40 controls the entire operation of the inkjet recording apparatus 100 and controls the operation of each unit. The controller 40 includes a CPU 41 (Central Processing Unit) and a RAM 42 (Random Access Memory).

The CPU 41 performs various calculating processes and controls operations such as conveying the recording medium in the inkjet recording apparatus 100, supplying ink, discharging ink, and maintenance operation. The CPU 41 performs operation regarding recording the image based on the image data, status signals and clock signals of each unit according to programs readout from the storage 50.

The RAM 42 provides a memory space for work in the CPU 41 and stores temporary data. The RAM 42 may include a nonvolatile memory and the data stored in the nonvolatile memory and the data stored in the storage 50 are suitably assigned.

The storage 50 stores job data regarding the image recording obtained from outside through the communication unit 60, and control programs and setting data regarding various control operation by the controller 40. The DRAM is mainly used for temporarily storing the job data and its processing data, and the HDD (Hard Disk Drive) or the nonvolatile memory is used for storing the control program or the setting data, but the configuration is not limited to the above. For example, the job data may be stored in the nonvolatile memory, or the initial program or the initial setting data can be stored in the mask ROM which is not rewritable. The control program includes a conversion process program 51 which converts original image data obtained from the job data to driving image data for each nozzle.

The data stored in the storage 50 includes tone dot corresponding information 52, a dither matrix 53, a dispersion arrangement matrix 54, and a range setting table 55 which are referred when the conversion process program 51 is performed. The dither matrix 53 and the dispersion arrangement matrix 54 both include a positive integer (may or may not include 0) equal to or less than a number of array elements provided in a predetermined pattern, one integer provided for each array element in a predetermined number of columns. The tone dot corresponding information 52 shows a ratio of the different discharged amounts for the number of dots of discharged ink with respect to a tone value. The range setting table 55 is a table which corresponds the movement setting of how to move the ink discharge setting of the ink discharge setting position with respect to the value of the array element in the dispersion arrangement matrix 54.

The communication unit 60 is a communication interface which controls the communication with external devices. Examples of the communication interface include, one or a plurality of interfaces corresponding to various communication protocols such as a LAN card. The communication unit 60 may obtain original image data as the target of recording from the external devices or setting data (job data) regarding recording the image based on the control by the controller 40. The communication unit 60 may also transmit status information to the external devices.

The display 70 displays the status and the operation menu in the inkjet recording apparatus 100 according to a control signal from the controller 40. The display 70 includes a display screen such as a liquid crystal display. The display 70 may include an LED used in a notification operation.

The operation receiving unit 80 receives operation from the user and outputs the result to the controller 40. The operation receiving unit 80 may include a touch sensor provided overlapped with the display screen, for example. The controller 40 associates the information regarding the contents and the position of the menu displayed on the display screen with the information regarding the type and the position of the touch operation by the user received by the operation receiving unit 80. The controller 40 controls each unit of the inkjet recording apparatus 100 to perform the process according to the operation. The operation receiving unit 80 may include a press button switch or numeric keys.

The bus 90 is a signal transmitting path which electrically connects the controller 40 with the other units and communicates the signals among each other.

Among the units described above, at least the controller 40 is included in the image data processing apparatus according to the present embodiment. The storage 50, the display 70, and the operation receiving unit 80 may be included in the image data processing apparatus according to the present embodiment.

Next, the image recording operation in the inkjet recording apparatus 100 is described.

Here, the original image data as the recorded target which is obtained included in the job data is data in which a density tone value in a multi-value (for example 256 tones) is determined for each color such as RGB or CMYK according to a pixel position determined depending on the image resolution. The controller 40 converts the original image data to driving data (driving image data) for each nozzle, and outputs the data to the head driver 25. The controller 40 performs control to discharge ink from the nozzle 27 set as the target to be driven at a suitable timing.

According to the inkjet recording apparatus 100 of the present embodiment, when the image is recorded, one of the following four types of ink discharge amounts is selected for each nozzle 27 as the driving image data, no ink discharge, small droplet discharge, medium droplet discharge in an amount larger than small droplet, and large droplet discharge in an amount larger than medium droplet (plurality of steps other than no discharge).

FIG. 4 is a diagram showing a change in the discharged dot percentage with relation to the tone shown in the tone dot corresponding information 52.

A threshold is set according to the discharged dot percentage shown with a thick broken line Dt with relation to the tone value. Whether the ink discharge setting is set is defined for each dot position by the dither method according to a half tone process (dither process) using the dither matrix 53 (first dither matrix). For the dot position defined as there is ink discharge, only small droplet discharge as shown with the thin broken line Ds is performed in a low tone region T1. When the tone increases as in the region T2, the ratio of the middle droplet discharge shown with the thin solid line Dm increases in contrast with the small droplet discharge. In the region T3, the switch is made so that only medium droplet discharge is performed. When the tone further increases to the region T4, the ratio of the large droplet discharge shown with the thick solid line Db increases compared to middle droplet discharge. In the region T5, only the large droplet discharge is performed.

Here, when the ink is discharged in the same position from the nozzle 27 of the head module 210 which discharges ink in different colors attached to a different carriage, actually, the landing position of the ink with these different colors slightly differ depending on the error of the position of the carriage or the attaching position of the head module 210 with relation to the carriage. Such shift does not stand out in the landing region of the ink, but at the boundary of the landing region, specifically, at the boundary of the straight line extending in one direction, the shift occurs systematically with a certain tendency. As a result, the color is smudged and the quality of the image decreases.

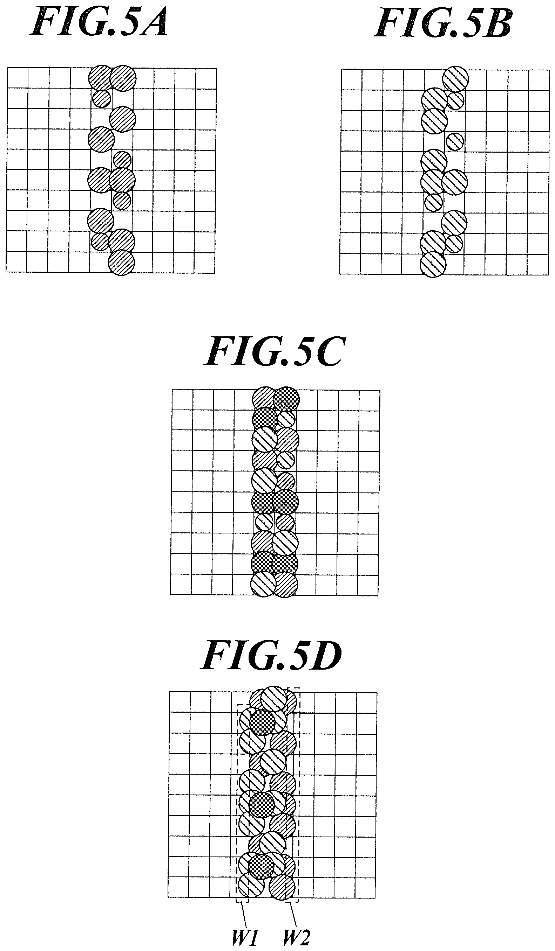

FIG. 5A to FIG. 5D are diagrams showing examples of ink discharge positions when a thin line is recorded overlapping ink in two colors.

When a thin line in a vertical direction with a width of 2 dots is recorded, if each color of the two colors of ink is accurately discharged according to the dot position determined in the halftone process as shown in FIG. 5A and FIG. 5B, a thin line suitably mixing these two colors of ink is recorded as shown in FIG. 5C.

However, if the ink discharge position of one color of ink is relatively shifted from the ink discharge position of the other color of ink, especially if the direction of the shift is in the width direction of the thin line, that is, the perpendicular direction with relation to the boundary of the line, as shown in FIG. 5D, a range W1 in one side of the thin line is a region in which only one color of ink lands, and a range W2 on the other side of the thin line is a region in which only the other color of ink lands. This results in a smudge in the thin line. This is not limited to a thin line, and a similar smudge may occur in the outline of a shape. Which ink shifts relatively to which direction may change depending on the mode and the phase of the vibration of the conveying belt 11 or depending on the position.

According to the inkjet recording apparatus 100, in the image with a clear outline as described above, the outline is slightly blurred by performing a dispersion movement process (movement process) which disperses the ink discharge setting of the ink discharge setting position (at least a portion of the ink discharge setting position) to the surrounding dot position using the dispersion arrangement matrix 54 (second dither matrix) on the halftone image of each color processed with the halftone process. With this, it is possible to suppress smudging due to the shift in the outline position among colors, and it is possible to reduce the decrease in the image quality. Surrounding dot position here means not only adjacent dot positions but also includes a range of a few dots (maximum value is determined in advance).

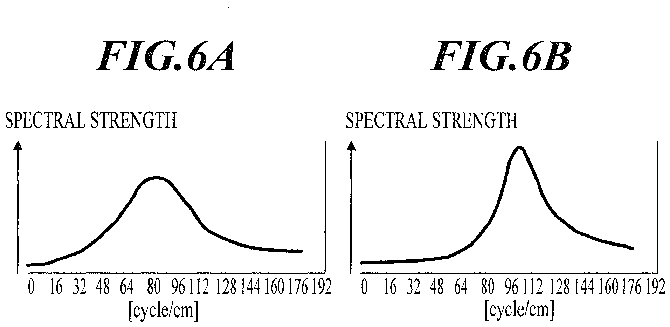

FIG. 6A and FIG. 6B are diagrams describing the attribute of the dither matrix 53 and the dispersion arrangement matrix 54.

The controller 40 performs the halftone process with the dither process using the dither matrix 53. The controller 40 disperses and moves the ink discharge setting using the dispersion arrangement matrix 54 in the direction according to the value from the original ink discharge setting position by the halftone process. The dither matrix 53 and the dispersion arrangement matrix 54 are dither matrixes with a similar numeric array characteristic but the numeric array is set separately.

The dither matrix 53 is a color noise, for example, green noise and includes frequency characteristics showing a peak of the spectral strength (strength peak) regarding the periodicity of the numeric array in the specific frequency range on the high frequency side. When such dither matrix 53 is applied and a half tone process is performed, for example, as shown in the spatial frequency characteristics in FIG. 6A (spatial length between array elements corresponds to product of nozzle interval dp (width direction) and time cycle of ink discharge multiplied by conveying speed (conveying direction)), the obtained halftone image is an image including spatial frequency characteristics according to the peak of the spectral strength (here, including a spectral strength peak in a position at about 80 cycles for 1 cm). With this, it is possible to suppress unevenness caused by white noise and the image is converted to a halftone image with natural image quality.

The dispersion arrangement matrix 54 is determined so that the strength peak of the frequency characteristic regarding the periodicity of the numeric array (that is, spatial frequency) is in the high frequency side (higher frequency) than the strength peak of the frequency regarding the periodicity of the numeric array in the dither matrix 53. The strength peak, due to its characteristic, is equal to or smaller than the frequency corresponding to the cycle doubling the dot interval in the spatial frequency of the recorded image data. By applying the dispersion arrangement matrix 54, the distribution of whether to discharge ink set in the dither matrix 53 is arranged with further detail so that the distribution in the dispersion arrangement destination has a spectral strength peak in the smaller spatial wavelength (higher spatial frequency) as shown in the spatial frequency characteristics shown in FIG. 6B. That is, near the boundary in a certain density region, the ink discharge position is arranged in a dispersed state.

Here, the spatial frequency regarding the dither matrix 53 and the spatial frequency regarding the dispersion arrangement matrix 54 (at least the frequency of the strength peak) are determined with isotropy, but may include anisotropy. When including anisotropy, for each direction component, the strength peak of the spatial frequency regarding the distribution of the dispersion arrangement destination can be determined to be in the higher frequency side than the strength peak of the spatial frequency regarding the distribution of the ink discharge setting position in the halftone process.

The values of the array components in the dispersion arrangement matrix 54 are classified among a plurality of ranges dividing the range between the maximum value and the minimum value. The dispersion arrangement, that is, the setting regarding moving the position of the ink discharge setting (at least setting of movement direction) is performed according to the above classification (range). In other words, the ink discharge setting of the ink discharge setting position is set to be moved to the dot position in the movement direction according to the range where the value of the array component to which the ink discharge setting position corresponds belongs in the dispersion arrangement matrix 54.

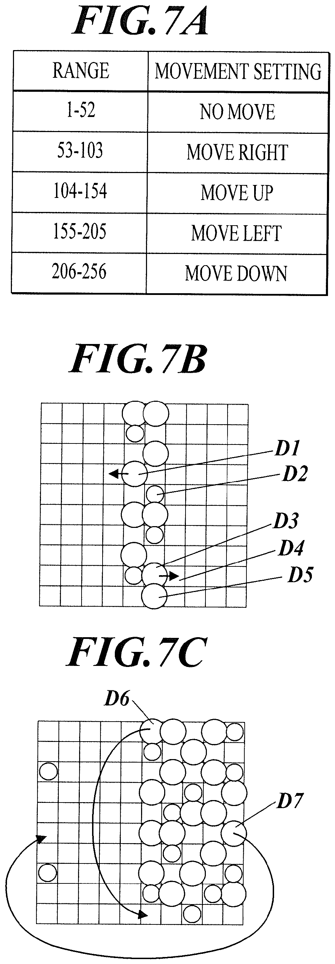

FIG. 7A to FIG. 7C are diagrams describing the dispersion arrangement of the ink discharge setting position.

For example, when any of the values 1 to 256 is assigned to each array component in the dispersion arrangement matrix 54, the ink discharge setting in the ink discharge setting position is moved according to the movement setting determined corresponding to the range including the value of the array component corresponding to the setting showing there is ink discharge in the dot position. As shown in the table in FIG. 7A, here, when the value of the array component is 52 or less, the movement of the ink discharge setting is not performed. When the value of the array component is 53 or more and 103 or less, the ink discharge setting is moved one dot in the right direction, and when the value of the array component is 104 or more and 154 or less, the ink discharge setting is moved one dot in the upward direction. When the value of the array component is 155 or more and 205 or less, the ink discharge setting is moved one dot in the left direction, and when the value of the array component is 206 or more and 256 or less, the ink discharge setting is moved one dot in the downward direction. Such movement setting (setting in the movement direction) is stored in advance in the storage 50 as the range setting table 55.

The setting in the range setting table 55 can be changed. The process to change the setting (range changing step) is called by predetermined input on the operation receiving unit 80, for example. In this case, the controller 40 displays the range setting table 55 on the display 70 and the range is changed according to the input on the operation receiving unit 80. The number of settings in the range and the movement direction can be increased or decreased. Alternatively, the range setting table 55 with different settings can simply overwrite the present table to change the setting.

The process regarding dispersion movement of the ink discharge setting is performed in a predetermined order on each dot position in the halftone image data. For example, here, the process is performed in order starting from the most top left edge dot position and advancing in the right direction. After reaching the right edge, the process advances to the dot position in the left edge one level below, and the process advances in the right direction.

When the value of the array component in the dispersion arrangement matrix 54 corresponding to the ink discharge setting position D1 shown in FIG. 7B is 164, the movement setting for the range including 164 is "move left". Therefore, the ink discharge setting of the ink discharge setting position D1 is moved for dispersion to the position 1 dot to the left as shown with the arrow. When the value of the array component in the dispersion arrangement matrix 54 corresponding to the ink discharge setting position D2 is 238, the movement setting for the range including 238 is "move down". However, the dot position 1 dot below the ink discharge setting position D2 has a setting as another ink discharge setting position. When the movement destination of one ink discharge setting is already set as the movement destination of another ink discharge setting, the movement of the one ink discharge setting is not performed.

After the ink discharge setting of the ink discharge setting position D3 moves one in the right direction, the ink discharge setting position D4 after movement becomes the next target of processing. However, the ink discharge setting already moved does not become a target of processing again. That is, when one ink discharge setting is previously moved from another ink discharge setting position, the one ink discharge setting is not moved.

Further, when the value of the array component in the dispersion arrangement matrix 54 corresponding to the ink discharge setting position D5 is 124, the movement setting for the range including 124 is "move up". However, as shown in the original ink discharge setting position D3, when the ink discharge setting is already moved and the ink is not discharged in a certain dot position, the ink discharge setting is not moved to fill such dot position again. That is, when the movement destination of one ink discharge setting is a position of a movement source of an ink discharge setting already moved to another dot position, the one ink discharge setting is not moved.

According to the movement limits of the ink discharge setting, there are many limits in the movement in the direction inside the outline of a shape in which a large amount of ink discharge settings are arranged, and relatively, the dispersion movement tends to be in the direction outside the outline. With this, the smudging of the outline can be reduced more efficiently.

In the ink discharge setting moved from the ink discharge setting positions D1 and D4, the ink discharge amount is set to medium droplet. When the ink discharge amount in the ink discharge setting in the original position (movement source) of the ink discharge setting is not small droplet (minimum value), the ink discharge amount after being dispersed and moved (movement destination) can be determined at a predetermined level, for example one level reduced. That is, when the ink discharge setting with medium droplet is dispersed and moved, the ink discharge setting is changed to small droplet. As described above, by reducing the ink discharge amount regarding the ink discharge setting which is dispersed and moved, the unclearness of the outline due to dispersion movement can be reduced slightly.

As shown in FIG. 7C, one applied range of the dispersion arrangement matrix 54 can be applied as a cyclic boundary, that is, the vertical boundary continuing and the horizontal boundary continuing. With this, when the ink discharge setting is moved up from the ink discharge setting position D6 in the upper edge, the movement destination becomes the lower edge of the applied range. When the ink discharge setting is moved right from the ink discharge setting position D7 in the right edge, the movement destination becomes the left edge of the applied range. Similarly, when dispersed and moved downward from the lower edge ink discharge setting position, the position is moved to the ink dispersion setting position in the upper edge of the applied range, and when moved to the left from the left edge ink discharge setting position, the position is moved to the ink dispersion setting position in the right edge of the applied range. That is, in the range of the dot position surrounding where the ink discharge setting is dispersed and moved, a range of about a few dots is included with the cyclic boundary in between, and this may be a separated position in the space. Such process is especially effective in an image with a geometric pattern in which the same shape is repeatedly arrayed (pattern image).

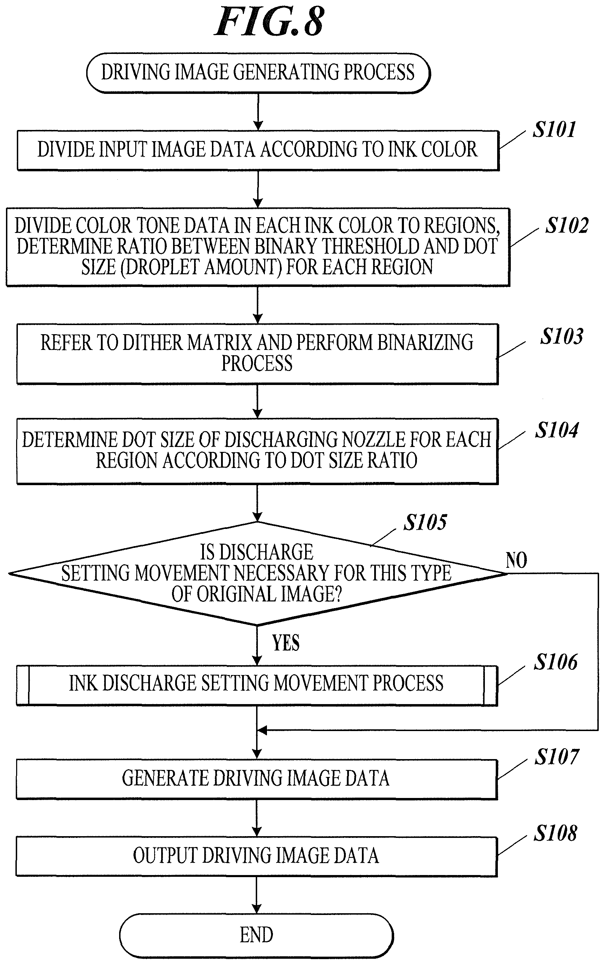

FIG. 8 is a flowchart showing a control process by the controller 40 in the driving image generating process executed in the inkjet recording apparatus 100.

The driving image generating process included in the conversion process program 51 starts when the image recording instruction is obtained regarding the job data.

When the driving image generating process starts, the controller 40 divides the original image data included in the job data to color tone data (density tone data) for each ink color which can be discharged from the image recorder 20 (step S101). When the color configuration of the original image data and the ink color which can be discharged is a combination of different colors (for example, RGB image data and CMYK ink color), and the division cannot be performed simply, the controller 40 performs division by converting the original image data to color tone value (density tone value) data for each color according to the ink color.

The controller 40 refers to the later described tone dot corresponding information 52 and obtains the relation of the tone value determined in advance with respect to the threshold and the ratio. The controller 40 sets the binarized threshold according to the tone value for each setting region (dot region according to a certain tone value) regarding the halftone process according to the color tone data (multi tone data). Moreover, the controller 40 sets the ratio (setting ratio) among small droplet, medium droplet and large droplet (ink discharge amount in a plurality of levels) for each setting region (step S102).

The controller 40 refers and applies the dither matrix 53 and performs the halftone process separately on the original image data of each color component with the threshold set using the dither method to generate halftone image data (step S103; first processing step). The controller 40 compares the threshold for each dot position on which ink is discharged and landed with the value of each component in the dither matrix 53. When the value of the component is equal to or more than the threshold, the setting is set to ink is discharged. When the value of the component is less than the threshold, the setting is set to ink is not discharged. With this, the setting is set showing whether ink is discharged or not. According to the above, the original image data is converted to binary data showing whether ink is discharged or not to each dot position. According to the set ratio among the ink discharge amounts, the controller 40 sets the ink discharge amount in the dot position showing that ink is discharged to any among a plurality of levels (large droplet, medium droplet, small droplet). With this, the data is set to four values, that is, two bit data (step S104). The relation between the binary value and whether ink is discharged or not and the correspondence between the four values and the droplet size are determined separately.

The controller 40 determines whether the type of original image (that is, the type of original image data) needs the ink discharge setting movement process (step S105; selection step). As described above, whether or not the ink discharge setting movement process is necessary is determined by whether the image has a clear outline. The image with a clear outline includes a character image and an image including shapes and repeated patterns of such shapes. The image without a clear outline includes a scenery image and a multi tone gradation pattern. When it is determined that the ink discharge setting movement process is necessary ("YES" in step S105), the controller 40 calls the ink discharge setting movement process and executes the process (step S106). Then, the process by the controller 40 advances to step S107. When it is determined that the ink discharge setting movement process is not necessary ("NO" in step S105), the process by the controller 40 advances to step S107.

The controller 40 generates the driving image data for the driving mechanism corresponding to each nozzle 27 (ink discharge setting data) based on the 2 bit data determined for each dot position (step S107). As described above, according to the predetermined conditions, the controller 40 distributes the dot position in the range with the plurality of nozzles 27 in the head unit 21 overlapping in the position in the width direction so that ink can be discharged from a nozzle 27 and the driving image data is generated. The condition regarding distribution can be any of the various conventionally well-known conditions alone or in combination. The second processing step according to the image data processing method of the present embodiment includes the process in steps S106 and S107.

The controller 40 outputs the generated driving image data in a unit of a predetermined number of lines in the conveying direction (for example, one line) to the head driver 25 at the timing according to the ink discharge interval for the conveying speed and the conveying direction of the recording medium (step S108). Then, the controller 40 ends the driving image generating process.

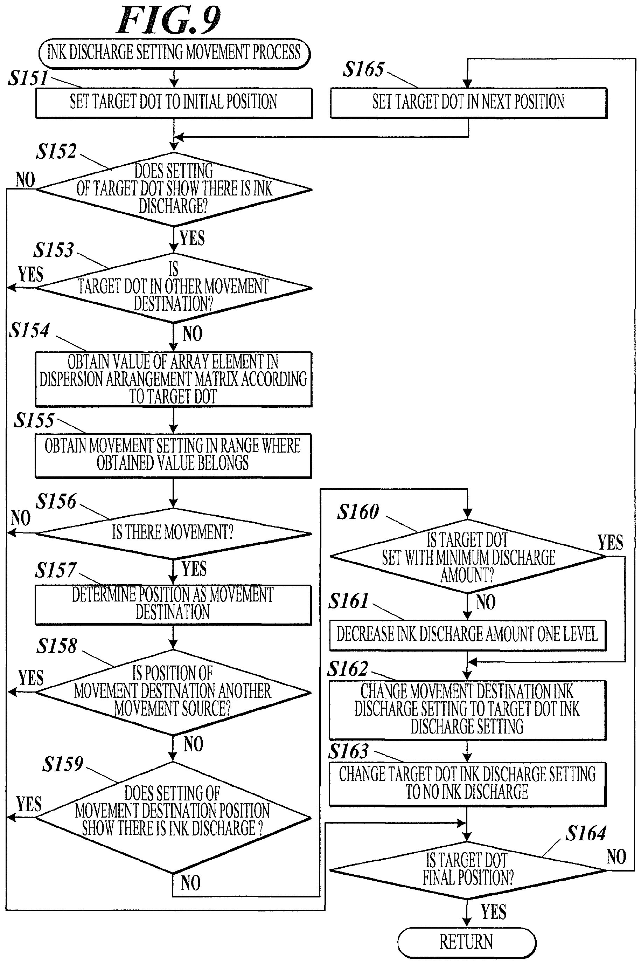

FIG. 9 is a flowchart showing a control process of the ink discharge setting movement process called in the driving image generating process.

When the ink discharge setting movement process is called, the controller 40 sets the dot position which is the target of the dispersion movement process as the initial position (step S151). As described above, the initial position can be set to the left edge of the top of the halftone image, for example.

The controller 40 determines whether the setting shows that the ink is discharged to the target dot (step S152). When it is determined that the setting shows that the ink is not discharged ("NO" in step S152), the process by the controller 40 advances to step S164.

When it is determined that the setting shows that there is ink discharge ("YES" in step S152), the controller 40 determines whether the setting showing that the ink is discharged is setting moved from another dot position (step S153). When it is determined that the setting was moved from another dot position ("YES" in step S153), the process by the controller 40 advances to step S164.

When it is determined that the setting showing that the ink is discharged is not a setting moved from another dot position ("NO" in step S153), the controller 40 obtains the value of the array element in the distribution arrangement matrix 54 according to the target dot (step S154). The controller 40 refers to the range setting table 55, specifies the range according to the obtained value, and obtains the movement setting corresponding to the range (step S155).

The controller 40 determines whether the obtained movement setting is moved (step S156). When it is determined that there is no setting showing there is movement (setting is no move), ("NO" in step S156), the process by the controller 40 advances to step S164.

When it is determined that the obtained movement setting shows that there is movement ("YES" in step S156), the controller 40 specifies the dot position in the movement destination (step S157). The controller 40 determines whether the dot position of the movement destination is the movement source position for another movement already set (step S158). When it is determined that it is the movement source position for another movement ("YES" in step S158), the process by the controller 40 advances to step S164.

When it is determined that it is not the movement source position for another movement ("NO" in step S158), the controller 40 determines whether the movement destination position is set with the setting showing that there is ink discharge (step S159). Setting showing that there is ink discharge includes the case when the setting shows that there is ink discharge as a result of another movement. When it is determined that there is a setting showing that there is ink discharge ("YES" in step S159), the process by the controller 40 advances to step S164.

When it is determined that there is no setting showing that the ink is discharged ("NO" in step S159), the controller 40 determines whether the setting regarding the ink discharge for the target dot is setting showing the minimum discharge amount (step S160). When it is determined that the setting is not the minimum discharge amount ("NO" in step S160), the controller 40 decreases the discharge amount one level (step S161). Then, the process by the controller 40 advances to step S162. When it is determined that the setting is the minimum discharge amount ("YES" in step S160), the process by the controller 40 advances to step S162.

When the process advances to step S162, the controller 40 changes the ink discharge setting of the movement destination to the present ink discharge setting for the target dot (that is, the setting of the discharge amount after decreasing when the discharge amount is decreased in the process in step S160) (step S162). The controller 40 changes the ink discharge setting of the target dot to no ink discharge (step S163). Then, the process by the controller 40 advances to step S164.

When the process advances from steps S152, S153, S156, S158, S159, S163 to step S164, the controller 40 determines whether the target dot is the final position (step S164). Here, the final position is the bottom right edge in the halftone image data. When it is determined that it is not the final position ("NO" in step S164), the controller 40 sets the target dot to the next position (step S165). Then, the process by the controller 40 returns to step S152. When it is determined that it is the final position ("YES" in step S164), the controller 40 ends the ink discharge setting movement process and returns the process to the driving image generating process.

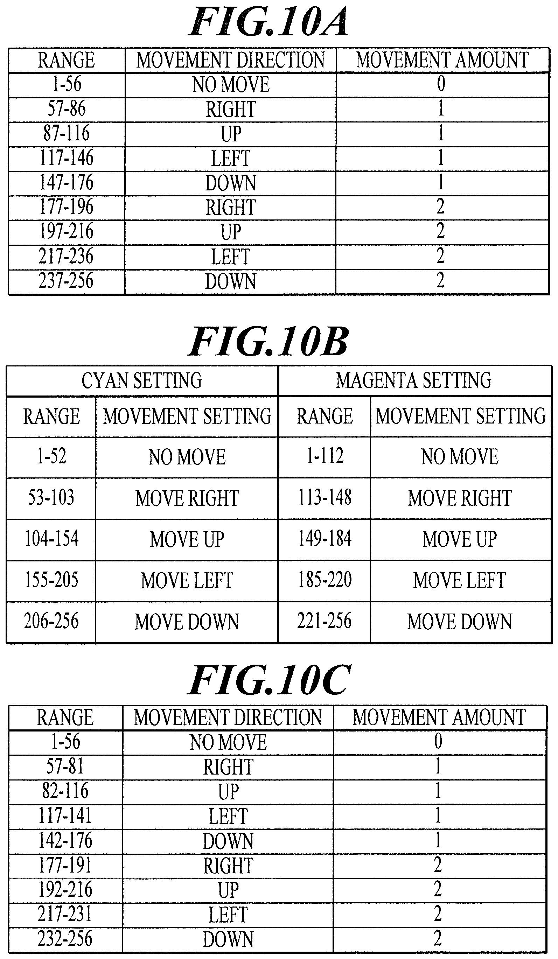

FIG. 10A to FIG. 10C are diagrams showing a modification of the range setting table 55.

As shown in FIG. 10A, as the position movement setting of the ink discharge setting, setting regarding the movement amount can be included in addition to the movement direction. When the ink landing position from the nozzle 27 corresponding to the head module 210 which discharges ink with a different color is shifted at least one dot position, by setting the movement amount according to the maximum shift amount, it is possible to suppress smudging. In this case, the set range amount becomes larger according to the number of movement amounts. The size of each range does not have to be even. Here, the example shows that the size of no move is 56, the size of movement amount "1" is 30 in each movement direction, and the size of movement amount "2" is 20 in each movement direction.

As shown in FIG. 10B, a different range setting can be set for each color of ink. Here, a different range is set for the ink in cyan and the ink in magenta. The ink discharge setting position for the ink in magenta is set so that the ink discharge setting is moved at a lower percentage compared to the ink discharge setting position of the ink in cyan. By changing the range setting according to visibility of each ink color, it is possible to effectively reduce the smudge due to the shift in the landing position from standing out.

As shown in FIG. 10C, the setting of the range in the movement direction may include anisotropy. Here, compared to the range setting the movement in the horizontal direction, the range setting the movement in the vertical direction is set larger. In fabrics, after the ink droplet lands, anisotropy occurs in the range of spreading until the ink is fixed according to the texture. With this, anisotropy occurs in the width of the smudge. That is, for example, by selectively employing the range setting table 55 with anisotropy depending on the type of medium, it is possible to blur the outline to effectively suppress smudging.

As described above, according to the image data processing method of the present embodiment performed by the controller 40 of the inkjet recording apparatus 100, the image data processing method of original image data as a target of recording by a plurality of head units 21 which discharge ink with colors different from each other include the following process, a first processing step which performs a halftone process on original image data for each component (for example, CMYK color component) with different colors and which generates halftone image data in which whether there is ink discharge setting is defined in each dot position, and a second processing step which generates ink discharge setting data in which a dispersion movement process is performed on the generated halftone image data for each color component, the dispersion movement process being a process in which the ink discharge setting in at least some of the ink discharge setting positions is dispersed and moved to a surrounding dot position.

By dispersing and moving the ink discharge position after the halftone process in an image with a clear outline, it is possible to suppress noticeable smudging caused by the relative shift in the ink discharge position among the head units 21. With this, it is possible to generate driving image data from which an image close to the visual impression of the original pattern can be obtained. That is, according to the image data processing method, it is possible to easily obtain driving image data in which the decrease of image quality of the image recorded by the inkjet recording apparatus 100 can be suppressed. Specifically, for filled shapes with a closed outline, the ink discharge position is easily dispersed and moved to the outside of the outline, and it is possible to effectively decrease smudging by using the driving image data.

Even if a low-pass filter is applied to the original image data and the outline is blurred before performing the halftone process, it is not possible to avoid smudging of the outline when the image is recorded (ink in a plurality of colors is discharged) based on the image data. When the halftone process is performed and then a process to disperse the ink discharge setting position is performed, by using the obtained driving image data, the smudging can be suppressed more efficiently.

According to the first processing step (step S103), the halftone process is performed by a dither method using the dither matrix 53. According to the second processing step (steps S106, S107), the dispersion movement process is performed using the dispersion arrangement matrix 54 and the dispersion movement direction is determined in the dispersion arrangement matrix 54 according to the value of the array element corresponding to each dot position.

Therefore, the driving image data with which smudging can be suppressed can be generated easily and swiftly using the above processes including two steps.

The frequency showing the strength peak in the frequency characteristics regarding the value array of the dispersion arrangement matrix 54 is higher than the frequency showing the strength peak in the frequency characteristics regarding the value array of the dither matrix 53. As described above, the ink dispersion setting position by the dither matrix 53 is dispersed and moved so as not to be concentrated. Therefore, the ink discharge setting positions are not concentrated and suitably dispersed. With this, the smudging hardly occurs and it becomes difficult to visually confirm the unevenness in the shape.

According to the dispersion movement process in step S106, the range between the maximum value (256) and the minimum value (1) in the dispersion arrangement matrix 54 is divided in a plurality of ranges, the movement direction is set for each range, and the movement direction of the ink discharge setting for the dot position corresponding to the array element is determined according to the range in which the value of the array element belongs in the dispersion arrangement matrix 54.

As described above, the movement direction is easily determined according to one value determined in advance. Therefore, the process is easy, and the driving image data can be generated swiftly with a low load.

The setting regarding the plurality of ranges and the setting regarding the movement direction according to the plurality of ranges are stored in advance in the storage 50 as the range setting table 55. That is, by preparing a matrix suitable for the dispersion movement process in advance, it is possible to obtain driving image data which reduces the smudging of the outline easily and accurately and which suppresses the decrease of the image quality.

According to the dispersion movement process, the range that the dispersion arrangement matrix 54 is applied in one time is set as the cycle boundary and the dot position in which the ink discharge setting is dispersed and moved is determined.

With this, it is possible to avoid not being able to reduce the blurring of the outline due to the dispersion movement becoming difficult at the boundary of the range that the dispersion arrangement matrix 54 is applied. Specifically, in the pattern image such as a geometric pattern in which a predetermined shape is repeatedly positioned, unnatural movement is hardly performed even if the cycle boundary is used, and it is possible to easily and effectively generate driving image data in which the smudging of the outline is reduced and the decrease in image quality is suppressed.

According to the second processing step, the dispersion movement of the ink discharge setting is performed in order for each dot position of the halftone image data, and when the movement destination of one ink discharge setting is already determined as the movement destination for another ink discharge setting, the one ink discharge setting is not dispersed and moved. With this, the ink discharge position is not concentrated or decreased, and it is possible to reduce the influence on the image.

According to the second processing step, when the movement destination of one ink discharge setting is the movement source of the ink discharge setting moved to another dot position, the one ink discharge setting is not moved. With this, it is possible to prevent the image from shifting in the same direction.

When the one ink discharge setting is already moved from another ink discharge setting position, the one ink discharge setting is not moved. That is, it is possible to prevent the total movement of the ink discharge setting from exceeding the initially set maximum movement amount. With this, it is possible to avoid unintended changes in the image.

According to the first processing step, a level among a plurality of levels of ink discharge amounts is set for each dot position. That is, the smudging of the image can be suppressed similarly for driving image data used in the inkjet recording apparatus 100 in which the ink discharge amount can be set in a plurality of levels. With this, it is possible to prevent images with unnatural outlines from being recorded.

According to the second processing step, when the ink discharge amount set for the movement source of the ink discharge setting determined to be moved is not the minimum value among the plurality of levels, the ink discharge amount in the movement destination of the ink discharge setting is set to a reduced amount. That is, by increasing the tone of the recorded image near the dot position regarding the moved ink discharge setting, the unclear outline caused when suppressing the smudging is reduced, and the ink discharge outside the outline does not stand out.

According to the image data processing method of the present embodiment, a range changing step is included to change the setting of the plurality of ranges used in the second processing step. That is, the percentage of the moved ink discharge setting and the anisotropy can be suitably changed according to the contents of the image, the type of image and the medium as the recorded target. With this, the image quality can be suitably maintained while suppressing the smudging of the recorded image.

The setting of the movement direction according to the plurality of ranges used in the second processing step includes the setting of the movement amount. That is, according to this image data processing, the movement can be 2 dots or more according to the size of the smudge. Depending on the medium, that is, the strength of the conveyor compared to the conveying speed (movement speed) and the conveying length (cycle length) of the conveying belt 14, the smudging may become large. Therefore, it is preferable that the movement amount can be suitably set according to the conditions. When the movement is performed in a plurality of dots, the plurality of dots are not moved uniformly, and the dispersion movement is performed within the range of the plurality of dots or less. Therefore, it is possible to obtain the image with the smudging reduced more naturally. With this, it is possible to effectively suppress the decrease of the image quality for the recorded image in the driving image data.

The setting of the plurality of ranges used in the second processing step includes anisotropy.

The anisotropy may occur in the smudge due to characteristics of the recorded image, characteristics of the medium as the ink output target and the generating mode of the vibration in the conveyor 10. The anisotropy is included in the setting of the range according to the characteristics of the smudge. Therefore, it is possible to avoid the smudge occurring in the portion of the recorded image or the outline becoming unclear more than necessary. It is also possible to suitably suppress decrease in the image quality.

According to the image data processing method of the present invention, the method includes a selecting step which selects whether to perform the second processing step based on the type of original image data. When an image with a vague outline such as an image with scenery (scenery picture or scenery photograph) is recorded, smudging of the outline hardly occurs. Compared to the effect of suppressing the smudging, the possibility of unclearness increasing becomes larger even if the second processing step is performed. In such case, by including the selecting step, the method can be switched so that the second processing step is performed only when there is a large desirable effect in performing the second processing step. With this, it is possible to effectively prevent the smudging in the recorded image while reducing the bad influence.

According to the image data processing apparatus of the present embodiment, the apparatus includes a controller 40 which performs a data process on the original image data as the target of recording by the plurality of head units 21 which discharge ink in different colors. The controller 40 performs the half tone process on the original image data for each component with different colors. The controller 40 generates the halftone image data for each color in which whether there is ink discharge setting is defined for each dot position. The controller 40 performs on the halftone image data generated for each color component the dispersion movement process which disperses and moves the ink discharge setting in at least some of the ink discharge setting positions to generate ink discharge setting data.

According to such processes by the controller 40, the image data processing apparatus is able to generate the driving image data to suppress the noticeable smudging due to the relative shift of the ink discharging position among the head units 21 and to obtain the image with the visible impression closer to the original pattern. Therefore, according to the image data processing apparatus of the present embodiment, it is possible to more easily generate the driving image data with which the reduction of the image quality of the recorded image can be suppressed.

According to the inkjet recording apparatus 100 of the present embodiment, the apparatus includes the above-described image data processing apparatus and the plurality of head units 21 which discharge ink in different colors.

According to such inkjet recording apparatus 100, it is possible to suppress blurring of the outline, and it is possible to easily suppress the decreasing of the image quality in the recorded image.

The present invention is not limited to the above embodiments and various modifications are possible.

For example, according to the present embodiment, the processes such as the halftone process and the process regarding the dispersion movement are performed using the dither matrix 53 and the dispersion arrangement matrix 54 which is a similar dither matrix. Alternatively, the halftone process can be performed by error dispersion, and the position of the ink discharge setting can be changed according to the random number value obtained for each dot position.

The dispersion movement direction of the ink discharge setting is not limited to being determined by one value, and for example, the direction can be determined by whether the movement is performed, the movement direction, and the movement amount being different values.

According to the above described embodiment, the frequency of the strength peak regarding the numeric array of the dispersion arrangement matrix 54 is higher than the frequency of the strength peak regarding the numeric array of the dither matrix 53, but the present invention is not limited to the above.

According to the present embodiment, a plurality of ink discharge settings are not moved to the same dot position, but the dispersion movement can be set so that the ink droplet amount regarding a plurality of ink discharge settings are added to discharge ink in one dot position. On the other hand, the ink discharge setting in a medium droplet or more can be divided and moved as small droplet discharge in a plurality of dot positions.

Alternatively, it is possible to allow ink discharge setting from other dot positions to move to the movement source dot position where the ink discharge setting was moved to another dot position.

It is not necessary to be able to set the ink discharge amount from the nozzles 27 to a plurality of levels, and the ink can be discharged from a single setting of the ink discharge amount.

The ink discharge amount in the movement destination after the dispersion movement does not have to be changed from the ink discharge setting in the movement source. The target dot position of the ink discharge setting can be simply moved.

According to the above-described embodiment, the ink discharge setting can be moved in four directions, up, down left and right. The setting can allow movement in diagonal directions.

According to the above-described embodiment, the range setting table 55 is set and held in advance, but only the setting condition of the range setting table may be held and the range setting table may be generated each time based on the setting condition.

A plurality of the dither matrixes 53 and the dispersion arrangement matrixes 54 may be held and selected randomly, or selected according to the type of image or the medium as the recorded target.

For example, the process of determination in step S105 may be omitted and the ink discharge setting movement process may always be performed for the image data process regarding the image recording on the inkjet recording apparatus in which the purpose of use or the type of image is limited in advance.

According to the present embodiment, the line head is described as the example, but the apparatus can be various inkjet recording apparatuses with a recording head 211 (head unit 21) provided with different nozzles for discharging different colors of ink.

The controlling operation performed by the controller 40 is not limited to software control by the CPU 41, and may include portions performed by hardware such as a logic circuit.

According to the present embodiment, the controller 40 of the inkjet recording apparatus 100 performs the halftone process and the dispersion movement process, but the above processes do not have to be performed in the inkjet recording apparatus 100. The above processes can be performed in a normal computer (PC), and the processed data can be transmitted to the inkjet recording apparatus 100.

The specific details such as the configuration, the structure, the contents of processes, and steps of the processes as described in the above embodiment can be suitably modified without leaving the scope of the present invention.

Although embodiments of the present invention have been described and illustrated in detail, the disclosed embodiments are made for purposes of illustration and example only and not limitation. The scope of the present invention should be interpreted by terms of the appended claims.

## Claims

1. An image data processing method performed on original image data as a target to be recorded by a plurality of recording operating units (20) including a plurality of recording heads (211) comprising a plurality of nozzles (27a), which discharge ink in different colors, the method comprising:
a first processing step which performs a half tone process on the original image data for each component in a different color by changing discharged dot percentages and which generates halftone image data in which an ink discharge setting is defined in each dot position; and
a second processing step which generates ink discharge setting data in which a movement process is performed on the halftone image data generated for each color component, the movement process being a process in which the ink discharge setting in at least some of an ink discharge setting position is moved to a surrounding dot position; wherein,
in the first processing step, the halftone process is performed by a dither method using a first dither matrix; and
in the second processing step, the movement process is performed using a dispersion arrangement matrix and a direction of a dispersion movement is determined according to a value of an array component corresponding to dot positions in the dispersion arrangement matrix.

2. The image data processing method according to claim 1, wherein a frequency showing a strength peak in a frequency characteristic regarding a numeric array in the dispersion arrangement matrix is higher than a frequency showing a strength peak in a frequency characteristic regarding a numeric array in the first dither matrix.

3. The image data processing method according to claim 1 or 2, wherein, in the second processing step, a range between a maximum value and a minimum value in the dispersion arrangement matrix is divided into a plurality of ranges, a movement direction is set for each range, and a movement direction of the ink discharge setting for the dot position corresponding to an array element is determined according to the range that a value of the array element belongs in the dispersion arrangement matrix.

4. The image data processing method according to claim 3, wherein, a setting of the plurality of ranges and a setting regarding the movement direction according to the plurality of ranges are stored and held in advance.

5. The image data processing method according to any one of claims 1 to 4, wherein, in the second processing step, the dot position to which the ink discharge setting is dispersed and moved is determined with a range applied by the dispersion arrangement matrix at one time set as a cycle boundary.

6. The image data processing method according to any one of claims 1 to 5, wherein, in the second processing step, the dispersion movement is performed in order for each dot position in the halftone image data, and when a movement destination of one ink discharge setting is already determined as a movement destination of another ink discharge setting, the dispersion movement for the one ink discharge setting is not performed.

7. The image data processing method according to any one of claims 1 to 6, wherein, in the second processing step, the dispersion movement is performed in order for each dot position in the halftone image data, and when a movement destination of one ink discharge setting is a movement source of an ink discharge setting for another dot position already moved, the dispersion movement for the one ink discharge setting is not performed.

8. The image data processing method according to any one of claims 1 to 7, wherein, in the second processing step, the dispersion movement is performed in order for each dot position in the halftone image data, and when one ink discharge setting is already moved from another ink discharge setting position, the dispersion movement for the one ink discharge setting is not performed.

9. The image data processing method according to any one of claims 1 to 8, wherein, in the first processing step, any one among a plurality of levels of ink discharge amount is set for each dot position.

10. The image data processing method according to claim 9, wherein, in the second processing step, when the ink discharge amount set for a movement source of the ink discharge setting determined to be dispersed and moved is not a minimum value among the plurality of levels of the ink discharge amount, the ink discharge amount in the movement destination of the ink discharge setting is determined to a decreased amount.

11. The image data processing method according to claim 3 or 4, further comprising a range changing step which changes setting of the plurality of ranges used in the second processing step.

12. The image data processing method according to any one of claims 3, 4, or 11, wherein a setting of a movement direction according to the plurality of ranges used in the second processing step includes setting a movement amount.

13. The image data processing method according to any one of claims 3, 4, 11 or 12 wherein a setting of the plurality of ranges used in the second processing step includes anisotropy.

14. The image data processing method according to any one of claims 1 to 13, further comprising a selecting step to select whether or not to perform the second processing step based on a type of the original image data.

15. An image data processing apparatus comprising:
a controller (40) configured to perform a data process for original image data as a target to be recorded by a plurality of recording operating units (20) including a plurality of recording heads (211) comprising a plurality of nozzles (27a), which discharge ink in different colors,
wherein, the controller (40) is configured to perform a first processing step so as to perform a half tone process on the original image data for each component in a different color to generate halftone image data for each color by changing discharged dot percentages, the halftone image data defining an ink discharge setting for each dot position, and
the controller (40) is configured to perform a second processing step so as to generate ink discharge setting data by performing a movement process on the halftone image data generated for each color, the movement process being a process in which the ink discharge setting in at least some of an ink discharge setting position is moved; wherein,
in the first processing step, the halftone process is performed by a dither method using a first dither matrix; and
in the second processing step, the movement process is performed using a dispersion arrangement matrix and a direction of a dispersion movement is determined according to a value of an array component corresponding to dot positions in the dispersion arrangement matrix.

16. An inkjet recording apparatus (100) comprising:
an image data processing apparatus according to claim 15; and
a plurality of recording operating units (21) configured to discharge a plurality of different colors of ink.

## Patentansprüche

1. Ein Bilddatenverarbeitungsverfahren, das an Originalbilddaten als ein aufzuzeichnendes Ziel durch eine Mehrzahl von Aufzeichnungsbetriebseinheiten (20) mit einer Mehrzahl von Aufzeichnungsköpfen (211) mit einer Mehrzahl von Düsen (27a), die Tinte in verschiedenen Farben ausstoßen, durchgeführt wird, wobei das Verfahren umfasst:
einen ersten Verarbeitungsschritt, der ein Halbtonverfahren an den Originalbilddaten für jede Komponente in einer anderen Farbe durchführt, in dem entladene Punkt-Prozentsätze geändert werden, und der Halbtonbilddaten erzeugt, in denen in jeder Punktposition eine Tinten-Entlade-Einstellung festgelegt ist; und
einen zweiten Verarbeitungsschritt, der Tintenausstoßeinstelldaten erzeugt, bei dem ein Bewegungsverfahren an den für jede Farbkomponente erzeugten Halbtonbilddaten durchgeführt wird, wobei das Bewegungsverfahren ein Verfahren ist, bei dem die Tintenausstoßeinstellung in mindestens einem Teil einer Tintenausstoßeinstellposition zu einer umgebenden Punktposition bewegt wird; wobei,
in dem ersten Verarbeitungsschritt das Halbtonverfahren durch ein Ditherverfahren unter Verwendung einer ersten Dithermatrix durchgeführt wird; und
in dem zweiten Verarbeitungsschritt das Bewegungsverfahren unter Verwendung einer Verteilungsanordnungs-Matrix durchgeführt wird und eine Richtung einer Verteilungsbewegung gemäß einem Wert einer Arraykomponente bestimmt wird, die Punktpositionen in der Verteilungsanordnungs-Matrix entspricht.

2. Das Bilddatenverarbeitungsverfahren nach Anspruch 1, wobei eine Frequenz, die eine Stärkespitze in einer Frequenzcharakteristik bezüglich eines numerischen Feldes in der Verteilungsanordnungs-Matrix zeigt, höher ist als eine Frequenz, die eine Stärkespitze in einer Frequenzcharakteristik bezüglich eines numerischen Feldes in der ersten Dithermatrix zeigt.

3. Das Bilddatenverarbeitungsverfahren nach Anspruch 1 oder 2, wobei in dem zweiten Verarbeitungsschritt ein Bereich zwischen einem Maximalwert und einem Minimalwert in der Verteilungsanordnungs-Matrix in eine Mehrzahl von Bereichen unterteilt wird, eine Bewegungsrichtung für jeden Bereich eingestellt wird und eine Bewegungsrichtung der Tintenausstoßeinstellung für die Punktposition, die einem Matrixelement entspricht, gemäß dem Bereich bestimmt wird, zu dem ein Wert des Matrixelements in der Verteilungsanordnungs-Matrix gehört.

4. Das Bilddatenverarbeitungsverfahren nach Anspruch 3, wobei eine Einstellung der Mehrzahl von Bereichen und eine Einstellung bezüglich der Bewegungsrichtung gemäß der Mehrzahl von Bereichen im Voraus gespeichert und gehalten werden.

5. Das Bilddatenverarbeitungsverfahren nach einem der Ansprüche 2 bis 4, wobei in dem zweiten Verarbeitungsschritt die Punktposition, auf die die Tintenausstoßeinstellung verteilt und bewegt wird, mit einem Bereich bestimmt wird, der von der Verteilungsanordnungs-Matrix zu einem als Zyklusgrenze festgelegten Zeitpunkt angewendet wird.

6. Das Bilddatenverarbeitungsverfahren nach einem der Ansprüche 1 bis 5, wobei im zweiten Verarbeitungsschritt die Dispersionsbewegung für jede Punktposition in den Rasterbilddaten der Reihe nach durchgeführt wird, und wenn ein Bewegungsziel einer Tintenausstoßeinstellung bereits als ein Bewegungsziel einer anderen Tintenausstoßeinstellung bestimmt ist, die Verteilungsbewegung für die eine Tintenausstoßeinstellung nicht durchgeführt wird.

7. Das Bilddatenverarbeitungsverfahren nach einem der Ansprüche 1 bis 6, wobei in dem zweiten Verarbeitungsschritt die Verteilungsbewegung für jede Punktposition in den Halbtonbilddaten der Reihe nach durchgeführt wird, und wenn ein Bewegungsziel einer Tintenausstoßeinstellung eine Bewegungsquelle einer Tintenausstoßeinstellung für eine andere, bereits bewegte Punktposition ist, die Verteilungsbewegung für die eine Tintenausstoßeinstellung nicht durchgeführt wird.

8. Das Bilddatenverarbeitungsverfahren nach einem der Ansprüche 1 bis 7, wobei in dem zweiten Verarbeitungsschritt die Verteilungsbewegung der Reihe nach für jede Punktposition in den Halbtonbilddaten durchgeführt wird, und wenn eine Tintenausstoßeinstellung bereits von einer anderen Tintenausstoßeinstellungsposition aus bewegt wird, die Verteilungsbewegung für die eine Tintenausstoßeinstellung nicht durchgeführt wird.

9. Das Bilddatenverarbeitungsverfahren nach einem der Ansprüche 1 bis 8, wobei im ersten Verarbeitungsschritt für jede Punktposition eine beliebige aus einer Mehrzahl von Stufen der Tintenausstoßmenge eingestellt wird.

10. Das Bilddatenverarbeitungsverfahren nach Anspruch 9, wobei in dem zweiten Verarbeitungsschritt, wenn die für eine Bewegungsquelle der Tintenausstoßeinstellung, die zur Verteilung und Bewegung bestimmt ist, eingestellte Tintenausstoßmenge kein Minimalwert unter den mehreren Stufen der Tintenausstoßmenge ist, die Tintenausstoßmenge in dem Bewegungsziel der Tintenausstoßeinstellung auf einen verringerten Betrag bestimmt wird.

11. Das Bilddatenverarbeitungsverfahren nach Anspruch 3 oder 4 ferner mit einem Bereichsänderungsschritt, der die Einstellung der Mehrzahl der im zweiten Verarbeitungsschritt verwendeten Bereiche ändert.

12. Das Bilddatenverarbeitungsverfahren nach einem der Ansprüche 3, 4 oder 11, wobei das Einstellen einer Bewegungsrichtung entsprechend der Mehrzahl der im zweiten Verarbeitungsschritt verwendeten Bereiche das Einstellen eines Bewegungsbetrags umfasst.

13. Das Bilddatenverarbeitungsverfahren nach einem der Ansprüche 3, 4, 11 oder 12, wobei eine Einstellung der Mehrzahl von Bereichen, die im zweiten Verarbeitungsschritt verwendet werden, Anisotropie einschließt.

14. Das Bilddatenverarbeitungsverfahren nach einem der Ansprüche 1 bis 13 ferner mit einem Auswahlschritt, um auf der Grundlage eines Typs der Originalbilddaten auszuwählen, ob der zweite Verarbeitungsschritt durchgeführt werden soll oder nicht.

15. Ein Bilddatenverarbeitungsgerät mit:
einer Steuerung (40), die ausgestaltet ist, um eine Datenverarbeitung für Originalbilddaten als ein Ziel durchzuführen, das durch eine Mehrzahl von Aufzeichnungsbetriebseinheiten (20) mit einer Mehrzahl von Aufzeichnungsköpfen (211) mit einer Mehrzahl von Düsen (27a) aufgezeichnet werden soll, die Tinte in verschiedenen Farben ausstoßen,
wobei die Steuerung ausgestaltet ist, um ein einen ersten Verarbeitungsschritt auszuführen, um so ein Halbtonverfahren an den Originalbilddaten für jede Komponente in einer anderen Farbe auszuführen, in dem entladene Punkt-Prozentsätze geändert werden, um Halbtonbilddaten für jede Farbe zu erzeugen, wobei die Halbtonbilddaten eine Tintenausstoßeinstellung für jede Punktposition festigen, und
die Steuerung ausgestaltet ist, um einen zweiten Verarbeitungsschritt auszuführen, in dem sie Tintenausstoßeinstelldaten erzeugt, in dem sie ein Bewegungsverfahren an den für jede Farbe erzeugten Halbtonbilddaten ausführt, wobei das Bewegungsverfahren ein Verfahren ist, bei dem die Tintenausstoßeinstellung in mindestens einem Teil einer Tintenausstoßeinstellposition bewegt wird; wobei
in dem ersten Verarbeitungsschritt das Halbtonverfahren durch ein Ditherverfahren unter Verwendung einer ersten Dithermatrix durchgeführt wird; und
in dem zweiten Verarbeitungsschritt das Bewegungsverfahren unter Verwendung einer Verteilungsanordnungs-Matrix durchgeführt wird und eine Richtung einer Verteilungsbewegung gemäß einem Wert einer Arraykomponente bestimmt wird, die Punktpositionen in der Verteilungsanordnungs-Matrix entspricht.

16. Ein Tintenstrahlaufzeichnungsgerät (100), das Folgendes umfasst:
ein Bilddatenverarbeitungsgerät nach Anspruch 15; und
eine Mehrzahl von Aufzeichnungsbetriebseinheiten, die ausgestaltet sind, um eine Mehrzahl von verschiedenen Tintenfarben auszustoßen.

## Revendications

1. Procédé de traitement de données d'image réalisé sur des données d'image d'origine en tant que cible à enregistrer par une pluralité d'unités d'opération d'enregistrement (20) comportant une pluralité de têtes d'enregistrement (211) comprenant une pluralité de buses (27a), qui déchargent de l'encre dans des couleurs différentes, le procédé comprenant :
une première étape de traitement qui réalise un processus de demi-teinte sur les données d'image d'origine pour chaque composante dans une couleur différente en changeant des pourcentages de points déchargés et qui génère des données d'image de demi-teinte dans lesquelles un réglage de décharge d'encre est défini dans chaque position de point ; et
une deuxième étape de traitement qui génère des données de réglage de décharge d'encre dans laquelle un processus de déplacement est réalisé sur les données d'image de demi-teinte générées pour chaque composante de couleur, le processus de déplacement étant un processus dans lequel le réglage de décharge d'encre dans au moins une partie d'une position de réglage de décharge d'encre est déplacé à une position de point environnant ; dans lequel,
à la première étape de traitement, le processus de demi-teinte est réalisé par un procédé de tramage à l'aide d'une première matrice de tramage ; et
à la deuxième étape de traitement, le processus de déplacement est réalisé à l'aide d'une matrice d'agencement de dispersion et une direction d'un déplacement de dispersion est déterminée selon une valeur d'une composante de tableau correspondant à des positions de point dans la matrice d'agencement de dispersion.

2. Procédé de traitement de données d'image selon la revendication 1, dans lequel une fréquence présentant un pic d'intensité dans une caractéristique de fréquence concernant un tableau numérique dans la matrice d'agencement de dispersion est plus élevée qu'une fréquence présentant un pic d'intensité dans une caractéristique de fréquence concernant un tableau numérique dans la première matrice de tramage.

3. Procédé de traitement de données d'image selon la revendication 1 ou 2, dans lequel, à la deuxième étape de traitement, une plage entre une valeur maximale et une valeur minimale dans la matrice d'agencement de dispersion est divisée en une pluralité de plages, une direction de déplacement est réglée pour chaque plage, et une direction de déplacement du réglage de décharge d'encre pour la position de point correspondant à un élément de tableau est déterminée selon la plage à laquelle une valeur de l'élément de tableau appartient dans la matrice d'agencement de dispersion.

4. Procédé de traitement de données d'image selon la revendication 3, dans lequel, un réglage de la pluralité de plages et un réglage concernant la direction de déplacement selon la pluralité de plages sont stockés et conservés à l'avance.

5. Procédé de traitement de données d'image selon l'une quelconque des revendications 1 à 4, dans lequel, à la deuxième étape de traitement, la position de point à laquelle le réglage de décharge d'encre est dispersé et déplacé est déterminée avec une plage appliquée par la matrice d'agencement de dispersion à un moment réglée en tant que limite de cycle.

6. Procédé de traitement de données d'image selon l'une quelconque des revendications 1 à 5, dans lequel, à la deuxième étape de traitement, le déplacement de dispersion est réalisé dans l'ordre pour chaque position de point dans les données d'image de demi-teinte, et lorsqu'une destination de déplacement d'un réglage de décharge d'encre est déjà déterminée en tant que destination de déplacement d'un autre réglage de décharge d'encre, le déplacement de dispersion pour le réglage de décharge d'encre n'est pas réalisé.

7. Procédé de traitement de données d'image selon l'une quelconque des revendications 1 à 6, dans lequel, à la deuxième étape de traitement, le déplacement de dispersion est réalisé dans l'ordre pour chaque position de point dans les données d'image de demi-teinte, et lorsqu'une destination de déplacement d'un réglage de décharge d'encre est une source de déplacement d'un réglage de décharge d'encre pour une autre position de point déjà déplacé, le déplacement de dispersion pour le réglage de décharge d'encre n'est pas réalisé.

8. Procédé de traitement de données d'image selon l'une quelconque des revendications 1 à 7, dans lequel, à la deuxième étape de traitement, le déplacement de dispersion est réalisé dans l'ordre pour chaque position de point dans les données d'image de demi-teinte, et lorsqu'un réglage de décharge d'encre est déjà déplacé par rapport à une autre position de réglage de décharge d'encre, le déplacement de dispersion pour le réglage de décharge d'encre n'est pas réalisé.

9. Procédé de traitement de données d'image selon l'une quelconque des revendications 1 à 8, dans lequel, à la première étape de traitement, l'un quelconque parmi une pluralité de niveaux de quantité de décharge d'encre est réglé pour chaque position de point.

10. Procédé de traitement de données d'image selon la revendication 9, dans lequel, à la deuxième étape de traitement, lorsque la quantité de décharge d'encre réglée pour une source de déplacement du réglage de décharge d'encre déterminé comme étant dispersé et déplacé n'est pas une valeur minimale parmi la pluralité de niveaux de la quantité de décharge d'encre, la quantité de décharge d'encre dans la destination de déplacement du réglage de décharge d'encre est déterminée à une quantité réduite.

11. Procédé de traitement de données d'image selon la revendication 3 ou 4, comprenant en outre une étape de changement de plage qui change le réglage de la pluralité de plages utilisées à la deuxième étape de traitement.

12. Procédé de traitement de données d'image selon l'une quelconque des revendications 3, 4 ou 11, dans lequel un réglage d'une direction de déplacement selon la pluralité de plages utilisées à la deuxième étape de traitement comporte le réglage d'une quantité de déplacement.

13. Procédé de traitement de données d'image selon l'une quelconque des revendications 3, 4, 11 ou 12, dans lequel un réglage de la pluralité de plages utilisées à la deuxième étape de traitement comporte une anisotropie.

14. Procédé de traitement de données d'image selon l'une quelconque des revendications 1 à 13, comprenant en outre une étape de sélection pour sélectionner de réaliser ou non la deuxième étape de traitement d'après un type des données d'image d'origine.

15. Appareil de traitement de données d'image comprenant :
un dispositif de commande (40) configuré pour réaliser un processus de données pour des données d'image d'origine en tant que cible à enregistrer par une pluralité d'unités d'opération d'enregistrement (20) comportant une pluralité de têtes d'enregistrement (211) comprenant une pluralité de buses (27a), qui déchargent de l'encre dans des couleurs différentes,
dans lequel, le dispositif de commande (40) est configuré pour réaliser une première étape de traitement de façon à réaliser un processus de demi-teinte sur les données d'image d'origine pour chaque composante dans une couleur différente pour générer des données d'image de demi-teinte pour chaque couleur en changeant des pourcentages de points déchargés, les données d'image de demi-teinte définissant un réglage de décharge d'encre pour chaque position de point, et
le dispositif de commande (40) est configuré pour réaliser une deuxième étape de traitement de façon à générer des données de réglage de décharge d'encre en réalisant un processus de déplacement sur les données d'image de demi-teinte générées pour chaque couleur, le processus de déplacement étant un processus dans lequel le réglage de décharge d'encre dans au moins une partie d'une position de réglage de décharge d'encre est déplacé ; dans lequel,
à la première étape de traitement, le processus de demi-teinte est réalisé par un procédé de tramage à l'aide d'une première matrice de tramage ; et
à la deuxième étape de traitement, le processus de déplacement est réalisé à l'aide d'une matrice d'agencement de dispersion et une direction d'un déplacement de dispersion est déterminée selon une valeur d'une composante de tableau correspondant à des positions de point dans la matrice d'agencement de dispersion.

16. Appareil d'enregistrement à jet d'encre (100) comprenant :
un appareil de traitement de données d'image selon la revendication 15 ; et
une pluralité d'unités d'opération d'enregistrement (21) configurées pour décharger une pluralité de couleurs d'encre différentes.
